# EUROPEAN PATENT APPLICATION

(11) **EP 4 518 404 A1**
(43) Date of publication of application: **05.03.2025**
(21) Application number: 23829706.3
(22) Date of filing: 06.05.2023
(51) Int. Cl.: H04W 24/02, H04W 24/08, H04W 28/02, H04W 28/20

(54) **COMMON SIGNAL MEASUREMENT METHOD FOR TERMINAL, AND TERMINAL AND STORAGE MEDIUM**

(30) Priority: 30.06.2022 CN 202210763495
(71) Applicant: ZTE Corporation, Shenzhen, Guangdong 518057 (CN)
(72) Inventor: GAO, Minggang, Shenzhen, Guangdong 518057 (CN); DING, Xuemei, Shenzhen, Guangdong 518057 (CN); XU, Ying, Shenzhen, Guangdong 518057 (CN); CHEN, Yan, Shenzhen, Guangdong 518057 (CN)
(74) Representative: Brunazzi, Stefano
(86) International application number: PCT/CN2023/092578
(87) International publication number: WO 2024/001520

(57) **Abstract**

The embodiments of the present invention provide a common signal measurement method for a terminal, and a terminal and a storage medium, which belong to the technical field of communications. The common signal measurement method for a terminal includes: determining whether a current terminal is a master terminal in a terminal cluster to which the current terminal belongs; when the current terminal is not the master terminal, acquiring first common signal data measured by the master terminal in the terminal cluster, and acquiring second common signal data corresponding to the current terminal according to the first common signal data.

## Description

### Cross-Reference to Related Application

The present invention claims the priority of Chinese Patent Application CN202210763495.8, filed on 30 June 2022 and entitled " Common Signal Measurement Method for Terminal, and Terminal and Storage Medium", the invention of which is incorporated herein by reference in its entirety.

### Technical Field

The present invention relates to the technical field of communications, and in particular, to a common signal measurement method for a terminal, and a terminal and a storage medium.

### Background

With the continuous deployment and widespread application of 5G systems, to better meet the specific needs of mid-range Internet of Things applications such as industrial wireless sensors, video monitors and wearable devices for reduced device complexity and cost, smaller size, and lower power consumption, Reduced Capability (Redcap) terminals emerge accordingly. For the Redcap terminals in the service cell, when each Redcap terminal needs to measure common signals and common channels, it switches from a small bandwidth dedicated Bandwidth Part (BWP) to a BWP that includes Cell Defining-Synchronization Signal Blocks (CD-SSB), and the corresponding services also have to be temporarily moved to the BWP that includes the CD-SSB, and it switches back to the small bandwidth dedicated BWP after the measurement is completed. In this way, the problem of frequent BWP switching occurs, which results in high power consumption of the Redcap terminal, and short interruption of the service, and may also cause BWP congestion including CD-SSB.

Therefore, how to reduce the frequency of switching of BWP, to reduce the power consumption and service interruption time of the terminal, and avoid BWP congestion including CD-SSB becomes a problem to be solved urgently.

### Summary

According to a first aspect, an embodiment of the present invention provides a common signal measurement method for a terminal, The method including: it is determined whether a current terminal is a master terminal in a terminal cluster to which the current terminal belongs; when the current terminal is a secondary terminal, first common signal data measured by the master terminal in the terminal cluster is acquired, and second common signal data corresponding to the current terminal is acquired according to the first common signal data.

According to a second aspect, an embodiment of the present invention further provides a terminal, comprising a memory, a processor, a program stored on the memory and operable on the processor, and a data bus for implementing connection and communication between the processor and the memory, the program, when being executed by the processor, implementing the steps of the common signal measurement method for the terminal according to any one of the embodiments of the present invention.

According to a third aspect, an embodiment of the present invention further provides a storage medium, applied to a computer readable storage. The storage medium stores one or more programs. The one or more programs may be executed by one or more processors to implement the steps of the common signal measurement method for the terminal according to any one of the embodiments of the present invention.

### Brief Description of the Drawings

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other accompanying drawings from these accompanying drawings without creative efforts.
Fig. 1 is a schematic diagram showing that Redcap UE1 and Redcap UE2 switch to a BWP0 including a CD-SSB for measurement;
Fig. 2 is a schematic diagram showing that the Redcap UE1 and the Redcap UE2 switch back to the original BWP after completing measurement;
Fig. 3 is a schematic flowchart of a common signal measurement method for a terminal according to an embodiment of the present invention;
Fig. 4 is a schematic flowchart of terminal measurement according to an embodiment of the present invention;
Fig. 5 is a schematic structural block diagram of a terminal according to an embodiment of the present invention.

### Detailed Description of the Embodiments

The technical solutions in the embodiments of the present invention will be described clearly and thoroughly below with reference to the accompanying drawings of the embodiments of the present invention. Obviously, the embodiments as described are some of the embodiments of the present invention, and are not all of the embodiments. On the basis of the embodiments in the present invention, all other embodiments obtained by a person of ordinary skill in the art without inventive effort shall all belong to the scope of protection of the present invention.

The flowchart in drawings is merely an example, the content and operations/steps are not necessary, nor being implemented as the described sequence. For example, some operations/steps can be decomposed, combined, or partially combined, and the actual execution sequence can be changed due to action conditions.

It should be understood that terms used in the description of the present invention are used for the purpose of describing specific embodiments only and are not intended to limit the present invention. Terms "a", "an", and "the" in singular forms as used in the description of the present invention and in the appended claims are also intended to cover plural forms, unless specified clearly otherwise in the context.

With the continuous deployment and widespread application of 5G systems, to better meet the specific needs of mid-range Internet of Things applications such as industrial wireless sensors, video monitors and wearable devices for reduced device complexity and cost, smaller size, and lower power consumption, Reduced Capability (Redcap) terminals emerge accordingly. For the Redcap terminals in the service cell, when each Redcap terminal needs to measure common signals and common channels, it switches from a small bandwidth dedicated Bandwidth Part (BWP) to a BWP that includes Cell Defining-Synchronization Signal Blocks (CD-SSB), and the corresponding services also have to be temporarily moved to the BWP that includes the CD-SSB, and it switches back to the small bandwidth dedicated BWP after the measurement is completed. In this way, the problem of frequent BWP switching occurs, which results in high power consumption of the Redcap terminal, and short interruption of the service, and may also cause BWP congestion including CD-SSB.

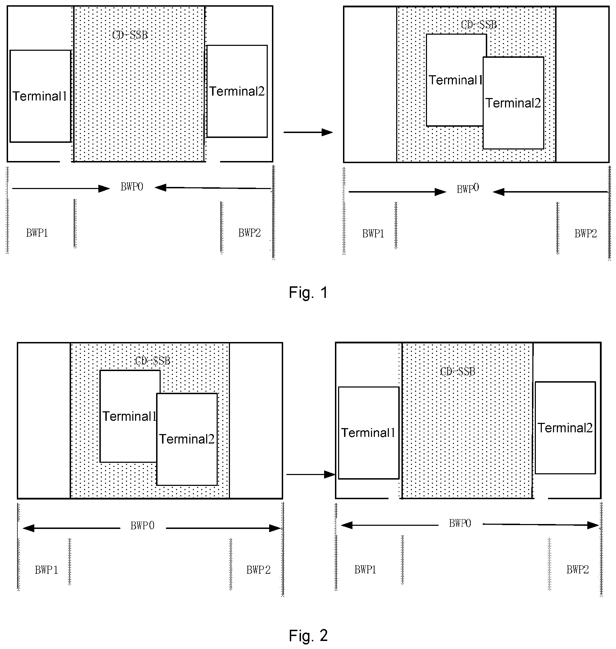

For example, as shown in Figs. 1 and 2, taking two Redcap terminals: a Redcap User Equipment (UE)1 and a Redcap UE2 as an example, As shown in Fig. 1, at time T1, a terminal 1 (Redcap UE1) switches from a bandwidth 1 (BWP1) with a small bandwidth to a bandwidth 0 (BWP0) including the CD-SSB, and performs measurement to obtain information such as a corresponding signal strength; a terminal 2 (Redcap UE2) switches from a bandwidth 2 (BWP2) with a small bandwidth to a bandwidth 0 (BWP0) including the CD-SSB and performs measurement to obtain information such as a corresponding signal strength. After the measurement is completed, as shown in Fig. 2, at time T2, the terminal 1 (Redcap UE1) switches back to the bandwidth 1 (BWP1) with a small bandwidth from the bandwidth 0 (BWP0), and the terminal 2 (Redcap UE2) switches back to a bandwidth 2 (BWP2) with a small bandwidth from the bandwidth 0 (BWP0).

In this way, there will be a problem of frequent BWP switching, and the service will be prone to transient interruption, and a congestion of BWP0 is also likely to occur.

In order to solve the described problem, the embodiments of the present invention provide a common signal measurement method for a terminal, a terminal and a storage medium, aiming at solving the problems that the power consumption of the terminal is large due to frequent switching of BWP, the service is prone to transient interruption, and a congestion of BWP including the CD-SSB is also likely to occur.

Some embodiments of the present invention will be described in detail below with reference to the accompanying drawings. The following embodiments and the features in the embodiments can be combined without conflicts.

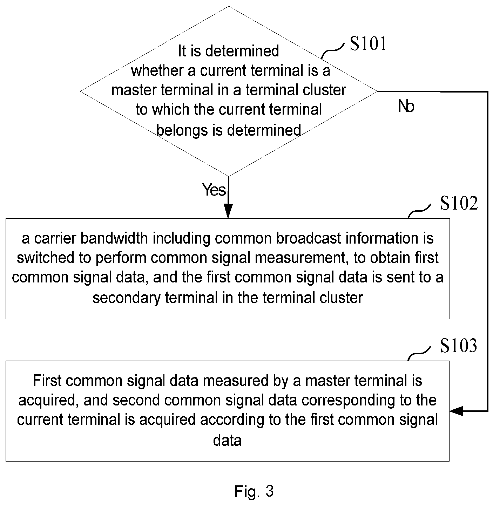

Please refer to Fig. 3, Fig. 3 is a schematic flowchart of a common signal measurement method for a terminal according to an embodiment of the present invention.

As shown in Fig. 3, the common signal measurement method for the terminal may include steps S101 and S102, or steps S101 and S103, or steps S101 to S103:
S101: it is determined whether a current terminal is a master terminal in a terminal cluster to which the current terminal belongs is determined; if so, step S102 is executed; and if not, step S103 is executed;
S102: a carrier bandwidth including common broadcast information is switched to perform common signal measurement, to obtain first common signal data, and the first common signal data is sent to a secondary terminal in the terminal cluster; and
S103: first common signal data measured by a master terminal is acquired, and second common signal data corresponding to the current terminal is acquired according to the first common signal data.

The terminal includes, but is not limited to, a Redcap terminal. Exemplarily, all terminals in each terminal cluster reside in the same serving cell. According to serving cells corresponding to the terminals, the terminals are divided into clusters, and terminals residing in the same serving cell are determined to belong to the same terminal cluster.

For example, it is assumed that there are four terminals connected to the same local area network, the terminal IDs of the four terminals are respectively a terminal 1, a terminal 2, a terminal 3 and a terminal 4, the four terminals reside in two serving cells, and the cell IDs of the two serving cells are respectively a cell 1 and a cell 2, wherein the terminal 1, the terminal 2, and the terminal 3 reside in cell 1, and the terminal 4 resides in the cell 2. In this case, the terminal 1, the terminal 2 and the terminal 3 form a terminal cluster, and the terminal 4 forms another terminal cluster.

In a normal operation process, in the same terminal cluster, only one terminal serves as a master terminal at the same time, and other terminals serve as secondary terminals. The determination of the master terminal may be implemented in various manners such as round-robin or application arbitration, which is not limited in the present invention.

It should be noted that the method for measuring the common signal may be run on a master terminal or a secondary terminal. In an exemplary embodiment, when the current terminal knows that the current terminal itself is a master terminal, the common signal measurement method for the terminal may include: when a public signal needs to be measured, the master terminal is switched to a carrier bandwidth including common broadcast information to perform common signal measurement, to acquire first common signal data, and the first common signal data is sent to a secondary terminal in the terminal cluster. In another exemplary embodiment, when the current terminal knows that the current terminal itself is a secondary terminal, the common signal measurement method for the terminal can further include: first common signal data measured by the master terminal is acquired, and second common signal data corresponding to the current terminal is acquired according to the first common signal data.

In an exemplary embodiment, before the terminals in the terminal cluster perform common signal measurement, an information deviation calibration operation for the respective terminals may be performed first to obtain calibration deviation information between each terminal in the terminal cluster and respective other terminals. Exemplarily, the calibration deviation information includes, but is not limited to, a signal strength calibration difference.

In some embodiments, before determining whether the current terminal is a master terminal in a terminal cluster to which the current terminal belongs, the method further includes: the current terminal is switched to a carrier bandwidth including common broadcast information to perform common signal measurement, to obtain first calibration common signal data, and the first calibration common signal data is sent to each of the other terminals in the terminal cluster; second calibration common signal data sent by each of the other terminals in the terminal cluster is received; and calibration deviation information between the current terminal and each of the other terminals in the terminal cluster is obtained according to the first calibration common signal data and each of the second calibration common signal data.

Exemplarily, a carrier bandwidth including common broadcast information includes but is not limited to a BWP including a CD-SSB, and in the following, the common signal measurement method for the terminal in the present invention is described by taking an example that a carrier bandwidth including common broadcast information is a BWP including a CD-SSB.

For example, still taking terminal 1, terminal 2, terminal 3, and terminal 4 as listed above as an example, each terminal is switched to BWP including the CD-SSB for the first time to perform common signal measurement, according to various measurement conditions, the terminals measured to have the same corresponding cell identifier (cell ID) are determined as a terminal cluster, for example, terminal 1, terminal 2 and terminal 3 form a terminal cluster, and each terminal obtains first calibration common signal data measured by itself, and transmits the measured first calibration common signal data to each of the other terminals in the terminal cluster, furthermore, receives second calibration common signal data sent by each of the other terminals. The calibration common signal data corresponding to each terminal includes, but is not limited to, a common signal strength value, public channel protocol data unit (PDU) information, etc. In this way, by determining the differences between first calibration common signal data and various second calibration common signal data, calibration deviation information of each terminal and respective other terminals in a terminal cluster is obtained, and calibration deviation information of each terminal itself and various other terminals in the terminal cluster is stored.

For example, still taking terminal 1, terminal 2, terminal 3 and terminal 4 listed above as an example, the basic measurement information after the four terminals are switched to the BWP including the CD-SSB for the first time to perform common signal measurement is shown in Table 1:

**Table 1**

| Terminal ID Cell ID Terminal IP address Signal strength value Common channel PDU information | | | | |
|---|---|---|---|---|
| 1 | 1 | 192.168.0.11 | -85 | 11 22 33 |
| 2 | 1 | 192.168.0.12 | -95 | 11 22 33 |
| 3 | 1 | 192.168.0.13 | -100 | 11 22 33 |
| 4 | 2 | 192.168.0.14 | -90 | 44 55 66 |

Due to the different and changing distances between each terminal and the base station, it is needed to perform calibration of difference values for the signal strength. However, for all terminals within the same cell, that is, within the same terminal cluster, the public channel PDU information is identical, so there is no need to perform calibration of difference values.

In some embodiments, after obtaining calibration deviation information between the current terminal and each of the other terminals in the terminal cluster, the method includes: a calibration table of the current terminal is generated according to the calibration deviation information between the current terminal and each of the other terminals in the terminal cluster and the terminal identifier information of each of the other terminals.

The terminal identifier information includes but is not limited to a terminal ID, a terminal IP address, etc. In the calibration table, calibration deviation information of other terminals is associated with terminal identifier information of other terminals one by one. For example, the signal strength calibration difference is associated with the terminal identifier information one by one.

For example, still taking Table 1 as an example, calibration deviation information calculation is performed according to the signal strength values of terminal 1, terminal 2 and terminal 3, and a calibration table of terminal 1 is generated, as shown in Table 2:

**Table 2**

| Peer terminal ID | Peer terminal IP address | Signal strength calibration difference value |
|---|---|---|
| 2 | 192.168.0.12 | -10 |
| 3 | 192.168.0.13 | -15 |

According to the signal strength values of the terminal 2, the terminal 1 and the terminal 3, calibration deviation information calculation is performed, and a calibration table of the terminal 2 is generated, as shown in Table 3:

**Table 3**

| Peer terminal ID | Peer terminal IP address | Signal strength calibration difference value |
|---|---|---|
| 1 | 192.168.0.12 | 10 |
| 3 | 192.168.0.13 | -5 |

According to the signal strength values of the terminal 3, the terminal 1 and the terminal 2, calibration deviation information calculation is performed, and a calibration table of the terminal 3 is generated, as shown in Table 4:

**Table 4**

| Peer terminal ID | Peer terminal IP address | Signal strength calibration difference value |
|---|---|---|
| 1 | 192.168.0.11 | 15 |
| 2 | 192.168.0.12 | 5 |

Since the terminal 4 resides in another cell and has no other paired terminals, the terminal 4 is not classified into a terminal cluster, and the calibration table of the terminal 4 is empty.

Thereafter, when the terminals in the terminal cluster need to perform common signal measurement, the ways for the master terminal and the secondary terminal to perform common signal measurement are different.

For example, still taking the described listed terminal cluster including the terminal 1, the terminal 2 and the terminal 3 as an example, if the terminal 1 is a master terminal and the terminal 2 and the terminal 3 are secondary terminals in this case, when a certain terminal therein is to perform common signal measurement, it is firstly determined whether the terminal is currently a master terminal in a terminal cluster to which the terminals belong. If the current terminal is the master terminal, the terminal is switched to the BWP including the CD-SSB for measurement to obtain the first common signal data of the master terminal. Furthermore, the master terminal sends the first common signal data to the secondary terminals in the terminal cluster one by one.

Exemplarily, the terminals in the terminal cluster establish a third-party connection by means of wiring or Bluetooth, and the master terminal sends the first common signal data to the other secondary terminals in the terminal cluster by means of the third-party connection with the other terminals in the terminal cluster.

If the current terminal is a secondary terminal, the secondary terminal obtains second common signal data corresponding to the secondary terminal according to the obtained first common signal data of the master terminal and according to the first common signal data.

Exemplarily, the common signal data corresponding to each terminal in the terminal cluster includes common measurement information and common data information, wherein the common measurement information includes, but is not limited to, a common signal strength value, and the common data information includes, but is not limited to, common channel PDU information, etc.

For example, taking the terminal 1 as an example, the terminal 1 is a master terminal, and the master terminal receives a request of a secondary terminal for measuring a common channel/common signal, or when the master terminal itself is required to measure the common channel/common signal, the master terminal switches to the BWP including the CD-SSB for measurement, assuming that the measured common signal strength value is -80 and the public channel PDU information is 11 22 33, the common signal strength value and the public channel PDU information are sent to the secondary terminals in the terminal cluster one by one, that is, sent to the terminal 2 and the terminal 3.

In some embodiments, second common signal data corresponding to the current terminal is acquired according to the first common signal data, includes: differential calculation is performed on first common measurement information in the first common signal data, to obtain second common measurement information in the second common signal data; and first common data information in the first common signal data is determined as second common data information in the second common signal data.

Exemplarily, differential calculation is performed on a common signal strength value of a master terminal to obtain a common signal strength value corresponding to the secondary terminal, and public channel PDU information of the master terminal is directly determined as the public channel PDU information corresponding to the secondary terminal.

For example, differential calculation is performed on the common signal strength value -80 corresponding to the terminal 1, to obtain the common signal strength value corresponding to the terminal 2, and the public channel PDU information 11 22 33 corresponding to the terminal 1 is determined as the public channel PDU information corresponding to the terminal 2.

In some embodiments, differential calculation is performed on first common measurement information in the first common signal data, to obtain second common measurement information in the second common signal data, includes: calibration deviation information between the current terminal and the master terminal is acquired; and the first common measurement information is added to the calibration deviation information, to obtain the second common measurement information.

Exemplarily, the common signal strength value of the current terminal is obtained by adding the signal strength calibration difference to the common signal strength value of the master terminal according to the signal strength calibration difference value between the current terminal and the master terminal.

In some embodiments, calibration deviation information between the current terminal and the master terminal is acquired, includes: a calibration table of the current terminal is queried to acquire calibration deviation information between the current terminal and the master terminal, wherein the calibration table includes calibration deviation information between the current terminal and each of the other terminals in the terminal cluster.

Exemplarily, according to the generated calibration table of the terminals, a calibration table corresponding to the current terminal is queried to obtain a signal strength calibration difference value between the current terminal and the master terminal.

In some embodiments, a calibration table of the current terminal is queried to acquire calibration deviation information between the current terminal and the master terminal, includes: terminal identifier information of the master terminal is determined; the calibration table is queried on the basis of the terminal identifier information, and calibration deviation information, associated with the terminal identifier information, in the calibration table is determined as calibration deviation information between the current terminal and the master terminal.

In the calibration table of the terminals, calibration deviation information of the terminal itself and other terminals is associated with terminal identifier information of other terminals one by one. By determining terminal identifier information of a master terminal and querying a calibration table, calibration deviation information associated with the terminal identifier information can be obtained, and the associated calibration deviation information is calibration deviation information of the current terminal and the master terminal.

For example, the terminal 2 is a secondary terminal, the terminal 2 receives and acquires the signal strength value -80 measured by the terminal 1 (the master terminal), and queries the calibration table of the terminal 2 to obtain that the signal strength calibration difference value between the terminal 2 and the terminal 1 is -10, then the terminal 2 calculates and obtains that the signal strength value of the position where the terminal 2 itself is located is -90, and decodes and stores the latest common channel PDU information 11 22 33.

The terminal 3 is also a secondary terminal, the terminal 3 receives and acquires the signal strength value -80 measured by the terminal 1 (the master terminal), and queries the calibration table of the terminal 3 to obtain that the signal strength calibration difference value between the terminal 3 and the terminal 1 is -15, then the terminal 3 calculates and obtains that the signal strength value of the position where the terminal 2 itself is located is -95, and decodes and stores the latest common channel PDU information 11 22 33.

In this way, the process of sharing the common signal data once is completed, and the operation that the terminal 2 and the terminal 3 perform BWP switching is avoided.

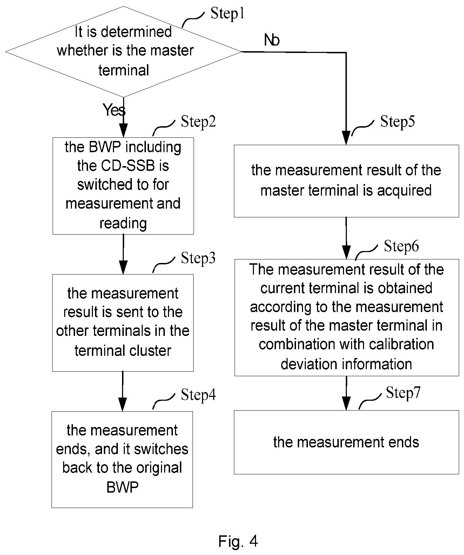

As shown in Fig. 4, the measurement flow of the terminal is as follows:
step 1: it is determined whether the current terminal is the master terminal in the terminal cluster; if so, skip to step 2; and if not, skip to step 5;
step 2: the BWP including the CD-SSB is switched to for measurement and reading;
step 3: the measurement result is sent to the other terminals in the terminal cluster;
step 4: the measurement ends, and it switches back to the original BWP;
step 5: the measurement result of the master terminal is acquired;
step 6: the measurement result of the current terminal is obtained according to the measurement result of the master terminal in combination with calibration deviation information;
step 7: the measurement ends.

In this way, for the secondary terminals in the terminal cluster, the operation that the secondary terminals frequently perform BWP switching is avoided, reducing the power consumption and service interruption time of the terminal, and avoiding the congestion of the BWP including the CD-SSB.

In the above embodiment, it is determined whether the current terminal is a master terminal in the terminal cluster to which the current terminal belongs, and if the current terminal is a secondary terminal, then first common signal data measured by the master terminal in the terminal cluster is acquired, and according to the first common signal data, second common signal data corresponding to the current terminal is obtained, and therefore, for the secondary terminal in the terminal cluster, the measurement can be completed without switching to the carrier bandwidth including the common broadcast information, thereby avoiding the operation of frequent carrier bandwidth switching performed by the terminal, reducing the power consumption and service interruption time of the terminal, and avoiding the congestion of the carrier bandwidth including common broadcast information.

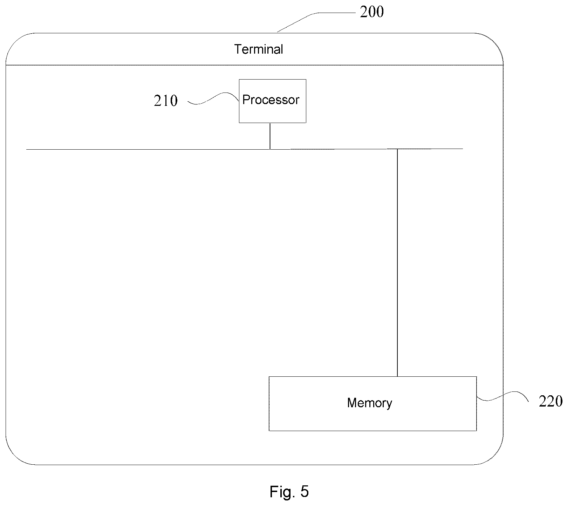

An embodiment of the present invention further provides a terminal. Refer to Fig. 5, Fig. 5 is a schematic block diagram of a terminal according to an embodiment of the present invention.

As shown in Fig. 5, the terminal 200 may include a processor 210 and a memory 220, wherein the processor 210 is connected to the memory 220 by using a bus, and the bus is, for example, an Inter-integrated Circuit (I2C) bus.

Specifically, the processor 210 may be a micro-controller unit (MCU), a central processing unit (CPU), a digital signal processor (DSP), etc.

Specifically, the memory 220 may be a Flash chip, a read-only memory (ROM) disk, an optical disk, a U disk, a removable hard disk, etc. The memory 220 stores various computer programs for execution by the processor 210.

The processor 210 is configured to execute a computer program stored in a memory, and implement the following steps when executing the computer program:
it is determined whether the current terminal is a master terminal in a terminal cluster to which the current terminal belongs; and
first common signal data measured by the master terminal in the terminal cluster is acquired when the current terminal is not the master terminal, and second common signal data corresponding to the current terminal is acquired according to the first common signal data.

In some embodiments, after determining whether the current terminal is a master terminal in the terminal cluster to which the current terminal belongs, the processor 210 is configured to:
switch to a carrier bandwidth including common broadcast information to perform common signal measurement in cases where the current terminal is the master terminal, to obtain the first common signal data, and send the first common signal data to a secondary terminal in the terminal cluster.

In some embodiments, common signal data corresponding to each terminal in the terminal cluster includes common measurement information and common data information; when acquiring second common signal data corresponding to the current terminal according to the first common signal data, the processor 210 is configured to:
perform differential calculation on first common measurement information in the first common signal data, to obtain second common measurement information in the second common signal data; and determine first common data information in the first common signal data as second common data information in the second common signal data.

In some embodiments, when performing differential calculation on first common measurement information in the first common signal data, to obtain second common measurement information in the second common signal data, the processor 210 is configured to:
acquire calibration deviation information between the current terminal and the master terminal; and
add the first common measurement information to the calibration deviation information, to obtain the second common measurement information.

In some embodiments, when acquiring calibration deviation information between the current terminal and the master terminal, the processor 210 is configured to:
query a calibration table of the current terminal to acquire calibration deviation information between the current terminal and the master terminal, wherein the calibration table includes calibration deviation information between the current terminal and each of the other terminals in the terminal cluster.

In some embodiments, when querying a calibration table of the current terminal to acquire calibration deviation information between the current terminal and the master terminal, the processor 210 is configured to:
determine terminal identifier information of the master terminal;
query the calibration table on the basis of the terminal identifier information, and determine calibration deviation information, associated with the terminal identifier information, in the calibration table as calibration deviation information between the current terminal and the master terminal.

In some embodiments, the terminal identifier information includes at least one of a terminal ID and a terminal IP address.

In some embodiments, before determining whether the current terminal is a master terminal in a terminal cluster to which the current terminal belongs, the processor 210 is configured to:
switch the current terminal to a carrier bandwidth including common broadcast information to perform common signal measurement, to obtain first calibration common signal data, and send the first calibration common signal data to each of the other terminals in the terminal cluster;
receive second calibration common signal data sent by each of the other terminals in the terminal cluster; and
obtain calibration deviation information between the current terminal and each of the other terminals in the terminal cluster according to the first calibration common signal data and each of the second calibration common signal data.

In some embodiments, after obtaining calibration deviation information between the current terminal and each of the other terminals in the terminal cluster, the processor 210 is configured to:
generate a calibration table of the current terminal according to the calibration deviation information between the current terminal and each of the other terminals in the terminal cluster and the terminal identifier information of each of the other terminals.

An embodiment of the present invention further provides a storage medium for computer readable storage. The storage medium stores one or more programs. The one or more programs may be executed by one or more processors to implement the steps of the common signal measurement method for the terminal according to any one of the embodiments of the present invention.

The storage medium may be an internal storage unit of the terminal in the foregoing embodiments, for example, a hard disk or a memory of the terminal. The storage medium may also be an external storage device of the terminal, for example, a plug-in hard disk, a smart media card (SMC), a secure digital (SD) card, a flash card, etc. which are equipped on the terminal.

A person of ordinary skill in the art could understand that the functional modules/units in all or some of the operations, systems and apparatuses of the methods disclosed above can be implemented as software, firmware, hardware, and any suitable combination thereof. In a hardware embodiment, the division of functional modules/units mentioned in the description above does not necessarily correspond to the division of physical components; for example, one physical component may have multiple functions, or one function or operation may be performed cooperatively by several physical components. Some or all of the physical components may be implemented as software executed by a processor, such as a central processing unit, a digital signal processor, or a microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to a person of ordinary skill in the art, the term "computer storage medium" includes transitory and non-transitory, removable and non-removable medium implemented in any method or technology for storing information (such as computer-readable instructions, data structures, program modules, or other data). The computer storage medium includes but is not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage apparatuses, or any other medium which can be used to store desired information and can be accessed by a computer. In addition, as is well known to a person of ordinary skill in the art, the communication medium typically includes computer-readable instructions, data structures, program modules, or other data in a modulated data signal such as a carrier or other transmission mechanisms, and may include any information delivery medium.

It should be understood that the term "and/or" as used in this specification and the appended claims refers to any and all possible combinations of one or more relevant items listed, and includes such combinations. It should also be noted that in the text, the terms "comprise", "include", or any other variations thereof are intended to cover a non-exclusive inclusion, so that a process, a method, an article, or a system that comprises a series of elements not only comprises those elements, but also comprises other elements that are not explicitly listed, or further comprises inherent elements of the process, the method, the article, or the system. Without further limitation, an element defined by a sentence "comprise a ..." does not exclude other same elements existing in a process, a method, an article, or a system that comprises the element.

The sequence number of the described embodiments of the present invention are only for description, but do not denote the preference of the embodiments. The foregoing descriptions are merely specific embodiments of the present application, and the scope of protection of the present invention is not limited thereto. A person skilled in the art would have readily conceived of equivalent modifications or replacements within the technical scope disclosed in the present invention, and the modifications or replacements shall all belong to the scope of protection of the present invention. Therefore, the scope of protection of the present invention shall be subject to the scope of protection of the claims.

## Claims

1. A method for measuring a common signal for a terminal, comprising:
determining whether a current terminal is a master terminal in a terminal cluster to which the current terminal belongs; and
acquiring, when the current terminal is not the master terminal, first common signal data measured by the master terminal in the terminal cluster, and acquiring second common signal data corresponding to the current terminal according to the first common signal data.

2. The method for measuring the common signal for the terminal according to claim 1, wherein after determining whether the current terminal is the master terminal in the terminal cluster to which the current terminal belongs, the method comprises:
switching to a carrier bandwidth including common broadcast information to perform common signal measurement when the current terminal is the master terminal, to obtain the first common signal data, and sending the first common signal data to a secondary terminal in the terminal cluster.

3. The method for measuring the common signal for the terminal according to claim 1 or 2, wherein the common signal data corresponding to each terminal in the terminal cluster comprises common measurement information and common data information;
acquiring the second common signal data corresponding to the current terminal according to the first common signal data comprises:
performing differential calculation on first common measurement information in the first common signal data, to obtain second common measurement information in the second common signal data; and determining first common data information in the first common signal data as second common data information in the second common signal data.

4. The method for measuring the common signal for the terminal according to claim 3, wherein performing differential calculation on first common measurement information in the first common signal data, to obtain second common measurement information in the second common signal data comprises:
acquiring calibration deviation information between the current terminal and the master terminal; and
adding the first common measurement information to the calibration deviation information, to obtain the second common measurement information.

5. The method for measuring the common signal for the terminal according to claim 4, wherein acquiring calibration deviation information between the current terminal and the master terminal comprises:
querying a calibration table of the current terminal to acquire the calibration deviation information between the current terminal and the master terminal, wherein the calibration table includes calibration deviation information between the current terminal and each of the other terminals in the terminal cluster.

6. The method for measuring the common signal for the terminal according to claim 5, wherein querying a calibration table of the current terminal to acquire the calibration deviation information between the current terminal and the master terminal comprises:
determining terminal identifier information of the master terminal;
querying the calibration table on the basis of the terminal identifier information, and determining calibration deviation information, associated with the terminal identifier information, in the calibration table as calibration deviation information between the current terminal and the master terminal.

7. The method for measuring the common signal for the terminal according to claim 4, wherein before determining whether the current terminal is the master terminal in the terminal cluster to which the current terminal belongs, the method also comprises:
switching the current terminal to a carrier bandwidth including common broadcast information to perform common signal measurement, to obtain first calibration common signal data, and sending the first calibration common signal data to each of the other terminals in the terminal cluster;
receiving second calibration common signal data sent by each of the other terminals in the terminal cluster; and
obtaining calibration deviation information between the current terminal and each of the other terminals in the terminal cluster according to the first calibration common signal data and each of the second calibration common signal data.

8. The method for measuring the common signal for the terminal according to claim 7, wherein after obtaining calibration deviation information between the current terminal and each of the other terminals in the terminal cluster, the method comprises:
generating a calibration table of the current terminal according to the calibration deviation information between the current terminal and each of the other terminals in the terminal cluster and the terminal identifier information of each of the other terminals.

9. A terminal, comprising a memory, a processor, a program stored on the memory and executable on the processor, and a data bus for implementing connection and communication between the processor and the memory, the program is configured to cause, when executed by a processor, the processor to perform the steps of the method for measuring the common signal for the terminal as claimed in any one of claims 1 to 8.

10. A storage medium, located at a computer readable storage, wherein the storage medium stores one or more programs, and the one or more programs can be executed by one or more processors to implement the steps of the method for measuring the common signal for the terminal as claimed in any one of claims 1 to 8.
